# FASCICULE DE BREVET EUROPEEN

(11) **EP 0 443 959 B1**
(45) Date de publication et mention de la délivrance du brevet: **21.12.1994**
(21) Numéro de dépôt: 91400480.9
(22) Date de dépôt: 21.02.1991
(51) Int. Cl.: A22C 17/10

(54) **Procédé de marquage d'un produit entouré d'une couche protectrice, tel qu'un jambon entouré de sa couenne, et un produit obtenu selon ce procédé**
Verfahren zum Markieren eines durch eine Schutzlage umgebenen Produktes wie von ihrer Schwarte umgebener Schinken und so hergestelltes Produkt
Method for marking a product covered by a protective layer such as a ham covered by its rind and product resulting therefrom

(30) Priorité: 21.02.1990 FR 9002144
(43) Date de publication de la demande: 28.08.1991
(73) Titulaire: PAUL PREDAULT, 95500 Gonesse (FR)
(72) Inventeur: Aguer, François Louis, F-94100 Saint-Maur (FR)
(74) Mandataire: Berger, Helmut

(56) Documents cités:
- EP-A- 0 326 485
- EP-A- 0 340 776
- FR-A- 657 598
- FR-A- 817 095
- GB-A- 25 697
- GB-A- 2 142 557
- US-A- 1 958 588
- US-A- 2 255 810

## Description

L'invention concerne un procédé de marquage d'un produit entouré d'une couche protectrice comportant des matières grasses et des protéines, tel qu'un jambon entouré de sa couenne, et un produit obtenu selon ce procédé, selon les préambules des revendications 1 et 4.

Un procédé et un produit de ce type sont connus par le document EP A-326 485. Selon ce document, un jambon est marqué en pratiquant, après l'opération de cuisson et avant l'emballage sous vide du produit, au moins une encoche continue dans la direction longitudinale du jambon, à partir de la surface extérieure jusqu'à une profondeur prédéterminée et on remplit l'encoche d'un moyen de marquage de façon que ce dernier reste incrusté dans l'encoche. Le moyen de marquage pourrait être de la gelée, une mousseline ou un pain azymé ou encore un fil d'or, une tresse de fil d'or ou un boyau tressé.

Ce procédé de marquage connu présente l'inconvénient que l'adhérence du produit de marquage à la couenne est parfois insuffisante de sorte qu'il se sépare de la couenne lorsqu'on découpe des tranches de jambon.

La présente invention a pour but de proposer un procédé de marquage et un produit ainsi marqué, qui ne présentent pas l'inconvénient de l'état de la technique, qui vient d'être énoncé.

Pour atteindre ce but, le procédé et le produit présentent les caractéristiques qui sont énoncées dans les parties caractérisantes des revendications 1 et 4.

D'autres caractéristiques avantageuses de l'invention sont décrites dans les revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisations de l'invention, et dans lesquels.

La figure 1 est une vue schématique et en perspective d'un jambon marqué selon la présente invention 1.

La figure 2 est une vue schématique et en perspective, à plus grande échelle, d'une bande de caséine destinée à constituer le moyen de marquage indiqué en II à la figure 1.

La figure 3 montre l'application du moyen de marquage selon la figure 2 sur un jambon avant l'opération de cuisson.

La figure 4 illustre schématiquement l'opération de cuisson du jambon pourvu du moyen de marquage selon la figure 3.

La figure 5 est une vue de détail, à plus grande échelle, de la partie indiquée en V à la figure 1.

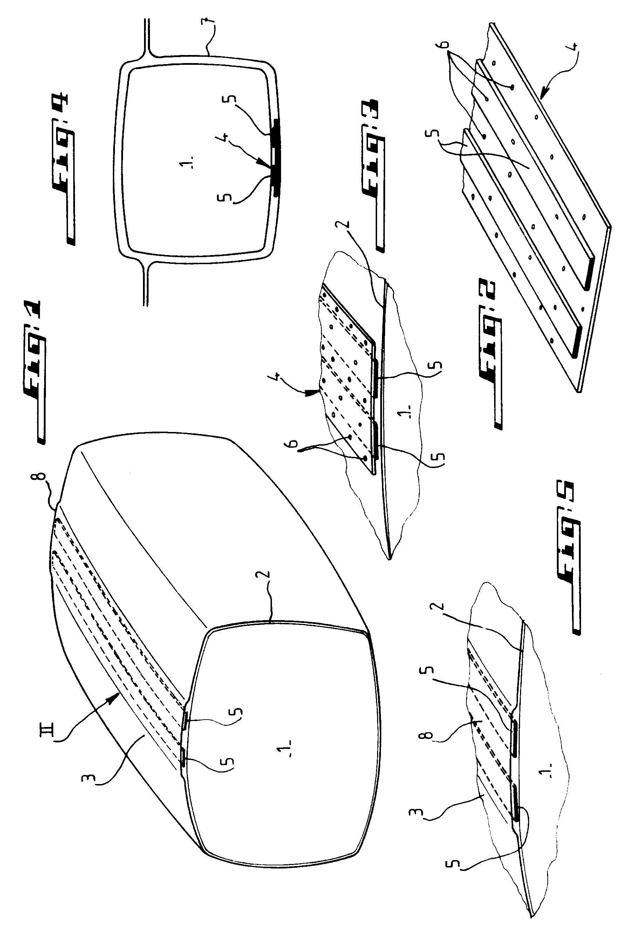

Sur la figure 1, un jambon cuit 1, avec sa couenne indiquée en 2 est marqué en 3 par un moyen de marquage 4 qui est montré à la figure 2 avant son application au jambon.

Ce moyen de marquage 4 est essentiellement formé par une bande de caséine et porte deux barres longitudinales imprimées parallèles 5, en une encre alimentaire. La bande de caséine peut avoir une épaisseur de par exemple 0,4 mm. L'épaisseur des bandes imprimées est exagérée pour faciliter la compréhension de l'invention. La bande de caséine 4 est pourvue de trous 6 qui permettent une humidification efficace et uniforme de la bande de caséine.

Comme le montre la figure 3, la bande de caséine 4 est appliquée sur la surface du jambon 1, plus précisément sur sa couenne 2. La surface de la bande 4, qui porte les barres imprimées 5 est en contact avec la couenne. Ensuite, le jambon 1 pourvu de la bande de marquage 4 est disposé dans une poche 7 en vue de l'opération de cuisson du jambon. La cuisson est effectuée généralement et avantageusement à une température de 70° pendant une durée par exemple de 15 heures. Pendant la cuisson, sous l'effet de l'humidité qui se dégage du jambon, notamment sous forme de vapeur d'eau qui reste confinée dans la poche 7, la bande de caséine adhère intimement à la couenne 2 en faisant corps avec celle-ci. Comme cela est illustré notamment à la figure 5, la couenne présente après la cuisson à l'endroit d'application de la bande de caséine 4 une surépaisseur indiquée en 8 qui a pratiquement le même aspect que la couenne, dans un plan de section transversale, sans discontinuité, et dans laquelle sont visibles, à une certaine profondeur, les deux barres de marquage 5. Bien entendu, l'encre doit avoir une couleur qui est différente de celle de la bande de caséine et de la couenne. La surépaisseur est supérieure à de l'épaisseur de la bande de caséine en raison du gonflement de celle-ci à la cuisson. On constate que la bande de caséine présente après la cuisson du jambon la même souplesse que la couenne du jambon et que les barres de marquage 5 se trouvent à une profondeur qui est supérieure à l'épaisseur de la bande de caséine 4.

Cette adhérence particulière de la bande de caséine 4 à la couenne 2 pourrait s'expliquer de la manière suivante : sous l'effet de l'humidité, la caséine et la couenne qui toutes les deux comportent des protéines s'interpénètrent par diffusion dans leur zone de contact, ce qui donne lieu à la formation d'un réseau dans cette zone. L'humidité a pour effet de "ramollir" à la fois la plaque de caséine et la couenne. L'effet de ramollissement et de la diffusion notamment de la caséine dans la couenne est au moins renforcé par la température de la vapeur d'eau qui agit celles-ci.

Pour compléter la description du procédé selon l'invention, il est à noter qu'après la cuisson et l'ouverture de la poche 7, on sort l'humidité de la poche et reconditionne le jambon à une température moyenne appropriée, comme cela est connu en soi.

Bien entendu, de diverses modifications peuvent être apportées à l'invention. Ainsi, l'impression sur la bande de caséine 4 peut avoir tout motif approprié. Celui-ci s'étendra avantageusement de façon continue sur la longueur du jambon, c'est-à-dire perpendiculairement au plan de découpe du jambon, de façon que chaque tranche découpée présente à sa périphérie, une zone de surépaisseur à l'intérieur de laquelle est visible un tronçon des barres ou lignes de marquage 5. Le moyen de marquage du fait qu'elle fait pratiquement corps de la couenne et présente la même souplesse que celle-ci, ne se désolidarise pas de la tranche, lorsque celle-ci est découpée du jambon. Chaque tranche est par conséquent sûrement et clairement visiblement marquée. Ce qui permet de la distinguer de tranches de jambon non marqués et indique sûrement son origine. Il est à noter que les barres ou lignes de marquage peuvent être prévues sur les deux faces de la plaque de caséine ou seulement sur la face extérieure.

L'invention n'est pas limitée au marquage d'un jambon. Elle est applicable à d'autres produits entourés d'une couche de protection formant une membrane relativement imperméable à l'humidité du produit et comportant des matières grasses, c'est-à-dire des lipides, et des protéines. La caséine pourrait être remplacée par toute autre matière à base de protéine, susceptible de diffuser dans la couche de protection sous l'effet de l'humidité absorbée lui conférant l'état d'un gel, telle que des feuilles de collagène.

Il est encore à noter que l'humidité nécessaire pourrait avoir d'autres origines que la vapeur dégagée par le produit lui-même au cours de l'opération de cuisson. On pourrait ainsi exposer la couche protectrice et le moyen de marquage par exemple à de la vapeur d'eau provenant d'une source séparée, indépendamment du produit.

## Revendications

1. Procédé de marquage d'un produit entouré d'une couche protectrice comportant des matières grasses et des protéines, tel qu'un jambon (1) entouré de sa couenne (2), selon lequel on rapporte sur la couche protectrice un moyen de marquage (4), caractérisé en ce que le moyen de marquage (4) rapporté sur la couche protectrice (2) est un produit à base de protéine, tel que la caséine ou une feuille de collagène (4), et, en ce que l'on expose la couche protectrice (2), au moins dans sa zone portant ledit moyen de marquage, à un milieu tel que de la vapeur d'eau ou du liquide, ayant un taux d'humidité suffisant pour que le produit de marquage adhère intimement à la couenne en formant un réseau avec celle-ci dans la zone de contact.

2. Procédé de marquage d'un jambon cuit (1), entouré de sa couenne (2), au moins dans la zone de marquage, selon la revendication 1, caractérisé en ce que l'on rapporte sur la surface extérieure de la couenne (2) de la portion de jambon (1) à marquer un élément de produit de marquage de forme appropriée, portant un motif imprimé (5), avant l'opération de cuisson, et soumet le jambon (1) avec cet élément (4) à l'opération de cuisson de façon qu'il vienne en contact avec l'humidité dégagée par la cuisson telle que le jus de cuisson et adhère intimement à la couenne en formant un réseau avec celle-ci dans la zone de contact.

3. Procédé selon l'une des revendications 1 ou 2, caractérisé en ce que l'on utilise un moyen de marquage qui porte au moins sur sa surface venant en contact avec le produit un motif de lignes de marquage imprimé.

4. Produit entouré d'une couche protectrice comportant des matières grasses et des protéines, telles qu'un jambon (1) entouré de sa couenne (2) et comportant un moyen de marquage (4) associé à la couche protectrice, le moyen de marquage ayant une forme allongée et s'étendant parallèlement à l'axe du produit, caractérisé en ce que le moyen de marquage (4) est formé par une plaque d'une matière à base de protéines, tel qu'une plaque de caséine ou une feuille de collagène qui est incorporé à la couche protectrice par interpénétration par diffusion de la matière de la plaque et de la couche protectrice en formant un réseau dans la zone de contact du moyen de marquage avec la couche protectrice.

5. Produit selon la revendication 4, caractérisé en ce que le produit de marquage (4) adhérant à la couenne (2) comporte avantageusement à une certaine profondeur des barres ou lignes de marquage (5).

6. Produit selon l'une des revendications 4 ou 5, caractérisé en ce que les barres ou lignes de marquage s'étendent de façon continue perpendiculairement au plan de découpe de tranches de jambon.

7. Produit selon la revendication 6, caractérisé en ce que les barres ou lignes de marquage (6) sont en une encre alimentaire lorsque le produit est un produit alimentaire tel qu'un jambon.

## Claims

1. Method of marking a product covered by a protective layer comprising fats and proteins, such as a ham (1) surrounded by its rind (2), according to which one fits a marking means (4) onto the protective layer, characterized in that the marking means (4) fitted onto the protective layer (2) is a protein-based product such as casein or a sheet of collagen (4) and in that one exposes the protective layer (2) at least in its zone carrying the said marking means to a medium such as steam or liquid having a moisture ratio sufficient for the marking product to closely adhere to the rind while forming a network with the latter in the contact zone.

2. Method of marking a cooked ham (1) surrounded by its rind (2) at least in the marking zone according to claim 1, characterized in that one fits onto the outside surface of the rind (2) of the ham portion (1) to be marked a marking product element of suitable shape carrying a printed pattern (5) prior to the cooking step and one subjects the ham (1) with this element (4) to the cooking step in order that it comes in contact with the moisture such as the cooking juice released by the cooking and closely adheres to the rind upon forming a network with the latter in the contact zone.

3. Method according to one of claims 1 or 2, characterized in that one uses a marking means which carries at least one its surface coming in contact with the product a printed pattern of marking lines.

4. Product surrounded by a protective layer comprising fats and proteins such as a ham (1) surrounded by its rind (2) and comprising a marking means (4) associated with the protective layer, the marking means having an elongated shape and extending in parallel relation to the axis of the product, characterized in that the marking means (4) is formed of a plate of a protein-based material such as a plate of casein or a sheet of collagen which is incorporated into the protective layer through interpenetration by diffusion of the material of the plate and of the protective layer upon forming a network in the zone of contact of the marking means with the protective layer.

5. Product according to claim 4, characterized in that the marking product (4) adhering to the rind (2) advantageously comprises at a certain depth marking bars or lines (5).

6. Product according to one of claims 4 or 5, characterized in that the marking bars or lines continuously extend at right angles to the plane of cutting ham slices off.

7. Product according to claim 6, characterized in that the marking bars or lines (6) are made from an alimentary ink when the product is a food product such as a ham.

## Patentansprüche

1. Verfahren zum Markieren eines von einer Schutzschicht umgebenen, Fette und Proteine aufweisenden Erzeugnisses, wie eines von seiner Schwarte (2) umgebenen Schinkens (1), gemäss welchem man ein Markierungsmittel (4) an der Schutzschicht anbringt, dadurch gekennzeichnet, dass das an der Schutzschicht (2) angebrachte Markierungsmittel (4) ein Produkt auf Basis von Protein oder eine Kollagenfolie (4) ist und dass man die Schutzschicht (2), wenigstens in ihrem das besagte Markierungsmittel tragenden Bereich einem Medium, wie Wasserdampf oder Flüssigkeit aussetzt, das einen ausreichenden Feuchtigkeitsgrad hat, damit das Markierungsproduckt innig an der Schwarte anhaftet unter Bildung mit derselben eines Netzwerkes in dem Berührungsbereich.

2. Verfahren zur Markierung eines wenigstens in dem Markierungsbereich von seiner Schwarte (2) umgebenen gekochten Schinkens (1) gemäss Anspruch 1, dadurch gekennzeichnet, dass man an der Aussenfläche der Schwarte (2) des zu markierenden Schinkenteiles (1) vor dem Kochvorgang ein ein gedrucktes Muster (5) tragendes Markierungsproduktelement geeigneter Gestalt anbringt und den Schinken (1) mit diesem Element (4) dem Kochvorgang unterwirft, damit er mit der durch das Kochen ausgeschiedenen Feuchtigkeit, wie dem Kochsaft in Berührung kommt und an der Schwarte innig anhaftet unter Bildung eines Netzwerkes mit der letzteren in dem Berührungsbereich.

3. Verfahren nach einem der Ansprüche 1 oder 2, dadurch gekennzeichnet, dass man ein Markierungsmittel verwendet, das ein gedrucktes Muster aus Markierungslinien wenigstens an seiner mit dem Erzeugnis in Berührung kommenden Fläche trägt.

4. Von einer Schutzschicht umgebenes, Fette und Proteine aufweisendes Erzeugnis, wie ein von seiner Schwarte (2) umgebener Schinken (1) mit einem der Schutzschicht zugeordneten Markierungsmittel (4), wobei das Markierungsmittel eine längliche Gestalt hat und sich parallel zu der Achse des Erzeugnisses erstreckt, dadurch gekennzeichnet, dass das Markierungsmittel (4) durch eine Platte aus einem Stoff auf Basis von Proteinen, wie eine Kaseinplatte oder eine Kollagenfolie gebildet wird, die in die Schutzschicht durch gegenseitiges Durchdringen durch Diffusion des Stoffes der Platte und der Schutzschicht unter Bildung eines Netzwerkes in dem Bereich der Berührung des Markierungsmittels mit der Schutzschicht einverleibt ist.

5. Erzeugnis nach Anspruch 4, dadurch gekennzeichnet, dass das an der Schwarte (2) anhaftende Markierungsprodukt (4) vorteilhaft Markierungsstriche bzw. Linien (5) in einer gewissen Tiefe aufweist.

6. Erzeugnis nach einem der Ansprüche 4 oder 5, dadurch gekennzeichnet, dass die Markierungsstriche bzw. Linien sich in durchgehender Weise senkrecht zu der Abschneideebene von Schinkenschnitten erstreckt.

7. Erzeugnis nach Anspruch 6, dadurch gekennzeichnet, dass die Markierungsstriche bzw. Linien (6) aus einer Nahrungstinte bestehen, wenn das Erzeugnis ein Nahrungsmittel wie ein Schinken ist.
